# FASCICULE DE BREVET EUROPEEN

(11) **EP 2 246 473 B1**
(45) Date de publication et mention de la délivrance du brevet: **15.07.2015**
(21) Numéro de dépôt: 10305419.3
(22) Date de dépôt: 21.04.2010
(51) Int. Cl.: E01C 7/22, C04B 111/00, C04B 26/26

(54) **Procédé de préparation d'un enrobé à chaud présentant une teneur réduite en liant.**
Verfahren zur Herstellung eines heissen Asphaltmischguts mit einem geringen Gehalt an Binder.
Process to prepare a hot bituminous mix with a reduce amount of binder.

(30) Priorité: 22.04.2009 FR 0952641
(43) Date de publication de la demande: 03.11.2010
(73) Titulaire: COLAS, 92100 Boulogne-Billancourt (FR)
(72) Inventeur: Carbonneau, Xavier, 78000, VERSAILLES (FR)
(74) Mandataire: Michelet, Alain

(56) Documents cités:
- WO-A1-01/62852
- US-A- 4 993 839

## Description

La présente invention concerne un procédé de préparation d'un enrobé à chaud permettant d'obtenir des enrobés comprenant une teneur réduite en liant selon le préambule de la revendication 1 tout en conservant d'excellentes performances mécaniques. L'invention concerne également les enrobés obtenus par ce procédé ainsi que les couches ou revêtements de construction réalisées avec ces enrobés. L'invention a donc des applications dans le domaine du génie civil et notamment de la construction ou la rénovation de voies ou pistes de roulement.

Selon l'invention, on entend par « enrobé » des granulats mélangés à un liant hydrocarboné tel que du bitume ou à des liants de synthèse confectionnés à partir de matières premières d'origine pétrolière ou issue de la biomasse, utilisé pour réaliser des couches et/ou revêtements de construction routière et/ou de génie civil. Le bitume est le principal liant hydrocarboné utilisé dans le domaine de la construction routière ou du génie civil. Il peut être utilisé pur ou modifié par ajout de polymères, il est alors appelé bitume modifié.

Les procédés de production de mélanges de granulats et de produits bitumineux actuellement utilisés, peuvent être classés en deux classes distinctes : les procédés de production d'enrobés ou d'enrobage à froid et à chaud. On entend par « enrobage à chaud », une opération dans une centrale d'enrobage, comprenant l'évaporation de l'eau du matériau et la mise à la température d'enrobage de ce dernier.

L'invention s'intéresse aux procédés d'enrobage à chaud réalisés à des températures supérieures à 100°C utilisant du bitume sous forme anhydre, dans un état de fluidité suffisant pour assurer un bon enrobage des granulats.

Le procédé traditionnel de fabrication d'un enrobé à chaud consiste à injecter, en une seule fois, le liant hydrocarboné sur un mélange granulaire préalablement chauffé et à malaxer l'ensemble. La température de fabrication est fixée en fonction de la viscosité du liant bitumineux utilisé. Dans ce procédé, la totalité du liant vient enrober l'ensemble du squelette et la fabrication se fait en une seule étape.

De nombreux travaux de recherche ont été réalisés pour optimiser les procédés de préparations d'enrobés à chaud et à froid.

On a notamment proposé, pour la réalisation d'un enrobé à froid, plus particulièrement d'un enrobé à émulsion, de réaliser un enrobage préalable à froid ou à chaud du sable. Cette étape d'enrobage préalable se traduit par une agglomération des éléments les plus fins. Il ne reste pratiquement plus d'éléments libres de taille inférieure à 40 µm dans le sable. Du coup, ces fines de sables agglomérées n'interviennent plus lors du second enrobage. Le brevet FR 2 686 630 décrit, par exemple, un procédé de fabrication d'enrobés routiers utilisant simultanément les techniques d'enrobage à chaud et à froid et notamment l'enrobage à chaud préalable du sable. Ce procédé correspond au processus industriel de fabrication du Compomac M2.

Il a également été proposé des procédés de préparation d'enrobés à chaud fabriqués à température réduite basés sur l'utilisation de deux liants bitumineux. Ces procédés ont pour but de maîtriser la viscosité des liants pour pouvoir fabriquer et mettre en oeuvre l'enrobé à température plus basse.

On peut notamment citer le procédé Shell Kolo Veidekke à base de liant mou et de mousse de bitume décrit dans la demande WO 01/62852. Ce procédé permet de mettre en oeuvre l'enrobé à température plus basse.

On peut également citer le brevet DEUTAG DE 43 08 567 qui décrit un procédé de fabrication d'enrobé bitumineux à température réduite utilisant un procédé d'enrobage en deux phases faisant intervenir successivement un liant mou puis un liant dur.

Il a enfin été proposé de produire des enrobés avec une teneur en liant plus faible, basés sur une maîtrise de l'ordre d'incorporation des constituants. Ainsi, dans la demande de brevet EP 1 408 157, on injecte la totalité du liant bitumineux sur les gravillons, puis on incorpore progressivement les éléments les plus fins du squelette granulaire avant, finalement, d'ajouter le sable.

Le brevet US 4 993 839 A divulgue aussi un procédé de préparation d'un enrobé à chaud.

La présente invention concerne un procédé de préparation d'enrobés à chaud permettant d'obtenir des formulations d'enrobés comprenant une teneur réduite en liant hydrocarboné. Ces compositions sont optimisées en terme de performance et de consommation de liants bitumineux. Le procédé de l'invention consiste à incorporer un même liant bitumineux en deux étapes successives à une seule température de fabrication.

La présente invention concerne donc un procédé de préparation d'un enrobé à chaud présentant une teneur réduite en liant hydrocarboné, ledit enrobé comprenant une quantité déterminée d'un liant hydrocarboné et un mélange granulaire comprenant au moins des éléments fins tels que des fines et des gros granulats tels que des gravillons, des graviers et/ou des sables, ledit procédé comprenant au moins les étapes successives suivantes :
- incorporation, dans un premier temps, à l'ensemble du mélange granulaire d'une première partie seulement de la quantité déterminée du liant hydrocarboné dans un malaxeur,
- malaxage humide pour former un mastic,
- incorporation dans un second temps, de la quantité restante de liant hydrocarboné,
- malaxage.

On comprend bien que la première partie de la quantité déterminée de liant en poids totale est inférieure à 100% en poids et également supérieure à 0% en poids de la quantité déterminée et que la seconde partie en est le complément à 100% en poids de la quantité déterminée afin qu'il y ait bien deux incorporations successives de liant.

Selon l'invention, l'étape d'incorporation de la première partie de liant hydrocarboné se fait sur l'ensemble du mélange granulaire. Le terme « ensemble » signifie que tous les constituants formant le mélange granulaire, c'est-à-dire les gros granulats et les éléments fins sont présents lors de cette première étape. Au sens de la présente demande, les termes « mélange granulaire » et « squelette granulaire » sont équivalents.

Selon le procédé de l'invention, la première incorporation de liant conduit à une agglomération des éléments les plus fins et les gravillons ne sont que très partiellement enrobés. Le mastic ainsi obtenu est enrichi en éléments fins.

Le mastic définit usuellement le mélange constitué par le liant bitumineux et les éléments les plus fins du squelette granulaire. Cependant, sans préciser de manière formelle la taille maximale des éléments rentrant dans sa composition, on peut faire le raisonnement suivant. Dans l'hypothèse d'un matériau constitué de sphères sur lesquelles le liant se répartirait de manière uniforme en un film d'épaisseur constant, il est possible de démontrer que la surface des éléments de diamètre inférieurs à 125 µm constituent la majorité de la surface de contact développée par le squelette granulaire, typiquement plus de 80 %. Cette limite peut donc être retenue pour la taille maximale des éléments constitutifs du mastic. La première incorporation de liant agglomère donc l'ensemble des éléments fins du mélange granulaire, y compris ceux présents à la surface des éléments les plus grossiers du sable et des gravillons.

Grâce à cette première étape, l'enrichissement de la première partie de liant hydrocarboné en fines limite son mélange ultérieur avec la quantité restante de liant. La quantité restante de liant peut alors finalement enrober l'ensemble des gravillons du squelette, et comme les fines ont disparues (elles ont été prises par le liant lors de la première étape), sa viscosité est peu modifiée.

Un mélange de liant bitumineux et de fines minérales présente des caractéristiques significativement différentes de celles du liant seul, notamment un module multiplié environ par un facteur cinq à dix, et une viscosité fortement augmentée, ce qui réduit sa capacité d'enrobage. On a ainsi mesuré pour 2 bitumes durs de grade 10/20, des modules sur liants purs à 15°C, 10Hz de respectivement 2,99.10⁷ Pa et 3,75.10⁷ Pa, et sur les mastics préparés avec ces liants des modules de 1,28.10⁸ Pa et 2,2.10⁸ Pa, soit une augmentation du module entre liant pur et mastic, d'un facteur 4 à 6. Dans le cas de l'invention, la seconde incorporation de liant apporte au mélange un bitume pur, qui ne se charge pas en fines, conservant ainsi ses caractéristiques propres.

De manière surprenante, le demandeur a découvert qu'en incorporant le liant bitumineux en deux fois, on obtient des produits présentant des performances mécaniques mesurées en laboratoires pratiquement identiques à celles d'une méthode traditionnelle tout en réduisant de 3% à 9% la quantité en poids de liant bitumineux nécessaire pour préparer l'enrobé, c'est-à-dire la quantité nécessaire pour former le mélange du liant hydrocarboné et du squelette granulaire.

De plus, selon le procédé de l'invention, un seul liant étant utilisé, les dispositifs d'enrobage ne nécessitent pas de modifications majeures. Par rapport au procédé permettant de réduire la température de préparation des enrobés réalisant une injection de deux liants de nature différente, le dispositif de l'invention est même simplifié puisqu'un seul réservoir de liant peut être mis en oeuvre.

Le procédé de l'invention constitue donc un procédé facile à mettre en oeuvre et présentant des avantages économiques certains. Ce procédé ne nécessite pas de modifier les structures existantes d'enrobage, mais surtout il permet de réaliser des économies importantes du point de vue des quantités de liant hydrocarboné.

Pris au sens général, les enrobés englobent tous les types d'enrobés bitumineux, pour couche d'assise et de roulement. Dans tous les cas, il s'agit d'un mélange de liant hydrocarboné et d'un squelette granulaire comprenant éventuellement des dopes et/ou additifs. Les différents types d'enrobés se distinguent par leur teneur en liant et leur domaine d'utilisation.

On peut citer à titre d'enrobés bitumineux pouvant être préparés selon le procédé de l'invention les enrobés bitumineux à module élevé (EME), les bétons bitumineux à module élevé (BBME), les bétons bitumineux semi-grenus (BBSG), les béton bitumineux mince (BBM) et les bétons bitumineux très minces (BBTM). De préférence, les enrobés obtenus selon l'invention comprennent au moins 4 %, de préférence 4,5% en poids de liant hydrocarboné (représentant la quantité déterminée de liant hydrocarboné).

Les EME, BBME, BBSG, BBM sont définis dans la norme EN 13108-1 : Mélanges bitumineux - Spécifications des matériaux Partie 1 Enrobés bitumineux, de février 2007. Les BBTM sont définis dans la norme EN 13108-2. Ces documents rappellent les différentes catégories de performances que l'on peut attribuer à chacune des formulations d'enrobés au cours de l'épreuve de formulation qui doit être obligatoirement réalisée pour tout mélange selon les conditions décrites dans la norme EN 13108-20 de juin 2006. Un niveau de caractéristique minimal, qui n'a que valeur de recommandations, est ainsi défini dans l'avant propos national des normes EN 13108-1 et EN 13108-2 pour chaque type de mélange.

Le choix possible pour l'étude de formulation des enrobés bitumineux, de l'approche fondamentale, a fait disparaître la notion de teneur en liant minimale. Néanmoins l'expérience a fait aboutir, préalablement à cette évolution normative, au fait que la teneur en bitume des BBME est classiquement plus élevée que celle des BBSG. Ainsi, l'ordre de grandeur classique du dosage minimal en bitume d'un BBME 0/10 ou 0/14 est généralement respectivement de 5,5% ou 5,21% en poids par rapport au poids total du mélange granulaire et de liant hydrocarboné.

Les principales différences entre BBSG et BBME concernent les performances mécaniques de module et de résistance en fatigue. Le tableau ci-dessous rappelle les caractéristiques recommandées dans l'avant propos de la norme EN 13108-1 dans le cas de l'approche fondamentale qui impose la détermination du module et de la résistance en fatigue, déterminé respectivement selon l'annexe A de la norme EN 12697-26 de décembre 2004 et l'annexe A de la norme EN 12697-24 de septembre 2007.

**Tableau 1 : Comparaison des caractéristiques recommandées pour les BBSG et BBME dans l'avant propos national de la norme NF EN 13108-1 Enrobés bitumineux.**

| Types d'enrobés | PCG (% de vide) 60 girations (D = 10 mm) 80 girations (D = 14 mm) | Orniérage % à 30 000 cycles | Module de rigidité (15°C, 10 Hz) en MPa | Déformation admissible en fatigue à 1 million de cycle (10°C, 25Hz) |
|---|---|---|---|---|
| BBSG Classe 1 | 5-10 4-9 | ≤ 10 | ≥ 5 500 | ≥ 100.10⁻⁶ |
| BBSG Classe 2 | 5-10 4-9 | ≤ 7,5 | ≥7 000 | ≥ 100.10⁻⁶ |
| BBSG Classe 3 | 5-10 4-9 | ≤ 5 | ≥ 7 000 | ≥ 100.10⁻⁶ |
| BBME Classe 1 | 5-10 4-9 | ≤ 10 | ≥ 9 000 | ≥ 100.10⁻⁶ |
| BBME Classe 2 | 5-10 4-9 | ≤ 7,5 | ≥ 11 000 | ≥ 100.10⁻⁶ |
| BBME Classe 3 | 5-10 4-9 | ≤ 5 | ≥ 11 000 | ≥ 100.10⁻⁶ |

Plus les performances des enrobés sont élevés plus la classe est importante. La classe du BBSG ou du BBME résulte du niveau de performance en tenue à l'orniérage. Elle est d'autant plus élevée que la profondeur d'ornière mesurée à l'essai diminue. Le procédé de l'invention en réduisant la teneur en liant favorise l'obtention de meilleure performance en tenue à l'orniérage. En effet, la tenue à l'orniérage baisse lorsque la teneur en liant hydrocarboné du mélange augmente. Par contre, il est remarquable que cette amélioration se fasse sans perte au niveau de la tenue en fatigue qui est une caractéristique elle aussi liée à la teneur en liant, mais qui varie en sens contraire, à savoir qu'elle croit avec la teneur en liant.

La formulation des EME est basée sur l'utilisation d'un liant dur, typiquement un liant spécial ou un liant de classe 10/20, en forte quantité, assez couramment avec un dosage supérieur à 5,66 %, pour assurer une tenue en fatigue élevée.

Le tableau ci-dessous rappelle les caractéristiques mécaniques des EME.

**Tableau 2 : Comparaison des caractéristiques recommandées pour les EME dans l'avant propos national de la norme NF EN 13108-1 Enrobés bitumineux.**

| | EME classe 1 | EME classe 2 |
|---|---|---|
| Orniérage % de vides moyen des plaques Profondeur d'ornière en % à 30 000 cycles 60 °C | 7% ≤ V ≥ 10% ≤ 7,5 % | 3% ≤ V ≥ 6% ≤ 7,5 % |
| Module complexe : - au % de vides compris entre - Module à 15°C, 10 Hz | 7% ≤ V ≥ 10% ≥14 000 MPa | 3% ≤ V ≥ 6% ≥14 000 MPa |
| Tenue à la fatigue - pourcentage de vides compris entre Déformation relative à 10⁶ cycles | 7% ≤ V ≥ 10% ≥ 100 µdefs | 3% ≤ V ≥ 6% ≥ 130 µdefs |

Le procédé de l'invention peut également être utilisé pour préparer des bétons bitumineux minces (BBM) et des bétons bitumineux très minces. Les BBM constituent un famille d'enrobés appliqués en couche de roulement, qui n'ont pas de réelles caractéristiques structurantes, à la différence des BBME et des EME. Leur épaisseur d'application est de 3 à 4 cm pour les formulations 0/10 et 3,5 à 5 cm pour les 0/14. On distingue 3 types (A,B ou C), selon que la courbe granulométrique est discontinue entre 2 et 6,3 mm (type A), 4 et 6,3 mm (type B) et continue (type C). La teneur en liant minimale de ces mélanges est de 5%, à l'exception des BBMc pour lesquels elle est de 4,8%. Pour chacun des types (A,B,C) on distingue 3 classes fonction du résultat de tenue à l'orniérage.

L'invention étant applicable à tout type de mélange, la température de fabrication dans le cas d'un enrobé à chaud traditionnel se fera selon les conditions stipulées par la norme NF P 98-150-1 de janvier 2008. Dans le cas de l'usage d'un liant modifié, la température de fabrication sera celle définie par le producteur du liant.

Dans divers modes de mise en oeuvre de l'invention, les moyens suivants peuvent être utilisés seuls ou selon toutes les combinaisons techniquement possibles :
- la première partie de la quantité de liant hydrocarboné incorporée en poids par rapport au poids total de la quantité déterminée de liant hydrocarboné est comprise entre 30% et 70%, de préférence comprise entre 40 et 60% ou de 30 à 50% et mieux encore de 50%,
- l'incorporation de la première quantité de liant hydrocarboné est effectuée à la température spécifiée pour la classe de bitume utilisée,
- l'incorporation de la quantité restante de liant hydrocarboné est effectuée la température spécifiée pour la classe de bitume utilisée,
- le premier et le second temps sont réalisés dans le même malaxeur,
- le mélange granulaire est chauffé avant l'incorporation de la première partie de la quantité déterminée du liant,
- la même température est utilisée lors des deux temps,
- l'enrobés est choisi parmi les enrobés bitumineux à module élevé (EME), les bétons bitumineux à module élevé (BBME), les bétons bitumineux semi-grenus (BBSG), les béton bitumineux mince (BBM) et les bétons bitumineux très minces (BBTM),
- la quantité déterminée de liant hydrocarboné est inférieure de 3,5% à 10% en poids, de préférence de 5 à 10% en poids, par rapport aux quantités déterminées de liant hydrocarboné utilisées dans les procédés de préparation d'enrobés à chaud connus,
- les éléments fins comprennent des fines ou fillers, c'est-à-dire des éléments de dimension inférieure à 80 microns, les fines ou fillers

représentent 1 à 10% en poids, de préférence 1 à 5% en poids par rapport au poids total de l'enrobé, c'est-à-dire du mélange de liant hydrocarboné et du squelette granulaire,
- les granulats représentent 80 à 95% en poids, de préférence 90 à 95% en poids par rapport au poids total de l'enrobé, c'est-à-dire du mélange de liant hydrocarboné et du squelette granulaire,
- le mélange granulaire comprend des agrégats d'enrobés,
- lorsque les enrobés sont choisis parmi les enrobés à module élevé (EME), et les bétons bitumineux à module élevé (BBME) les liants hydrocarbonés ont de préférence une pénétrabilité à 25°C, mesurée selon la norme NF EN 1426, de 0 à 70 (1/10 mm), de préférence de 0 à 50 (1/10 mm), et mieux de 0 à 35 (1/10 mm), ces liants hydrocarbonés sont de préférence choisis parmi les liants 10/20, 15/25 ou 20/30, c'est-à-dire des liants présentant une pénétrabilité à 25°C dans l'intervalle 10-30 (1/10 mm) et une température bille anneau proche de 68°C ou supérieure pour préparer des EME, BBME,
- lorsque l'enrobé est un béton bitumineux à module élevé, il peut comprendre en poids par rapport au poids total de l'enrobé, c'est-à-dire du mélange de liant hydrocarboné et du squelette granulaire:
- 1 à 5% de préférence 1,5 à 3 % et mieux encore 1,5 à 2,5 % de fines, de préférence du filler calcaire,
- 90 à 95 % de granulats de préférence des granulats 0/10, et
- 4,5% à 5,3%, de préférence 4,5% à 5% et mieux encore de 4,9 à 5,25 % de liant hydrocarboné (représentant la quantité déterminée de liant hydrocarboné selon l'invention), de préférence un bitume pur de classe 20/30,
- lorsque l'enrobé est est un enrobé à module élevé, il peut comprendre en poids par rapport au poids total de l'enrobé, c'est-à-dire du mélange de liant hydrocarboné et du squelette granulaire:
- 1 à 5%, de préférence 1,5 à 3 % et mieux encore 2 à 3 % de fines, de préférence du filler calcaire,
- 90 à 95 % de granulats de préférence des granulats 0/14, et
- 4,5 à 5,3%, de préférence 5 à 5,3 % de liant hydrocarboné, de préférence un bitume pur de classe 10/20,
- lorsque l'enrobé est un béton bitumineux mince, il peut comprendre en poids par rapport au poids total de l'enrobé, c'est-à-dire du mélange de liant hydrocarboné et du squelette granulaire :
- 1 à 5%, de préférence 1,5 à 3 %, et mieux encore 1,5 à 2,5 % de fines, de préférence du filler calcaire,
- 90 à 95 % de granulats de préférence des granulats 0/10, et
- 4,5 à 5,3%, de préférence 4,6 à 4,9 % de liant hydrocarboné, de préférence un bitume modifié par un polymère,
- les enrobés des familles précédentes (BBSG, BBME EME, BBM) peuvent être fabriqués à partir de liants modifiés des gammes colflex® (Colflex N,J, S et HP) Bitulastic® (EA,EB,EC, EC+ ED, EF, EH), et sacerflex® (1, 2, 3, 4), mais également toute nature de liant modifié,
- l'usage d'agrégats d'enrobés dans le mélange est également possible. Cette pratique est courramment utilisée pour préserver les ressources en granulats. Dans ce cas, la diminution de liant porte exclusivement sur le liant d'apport du mélange.

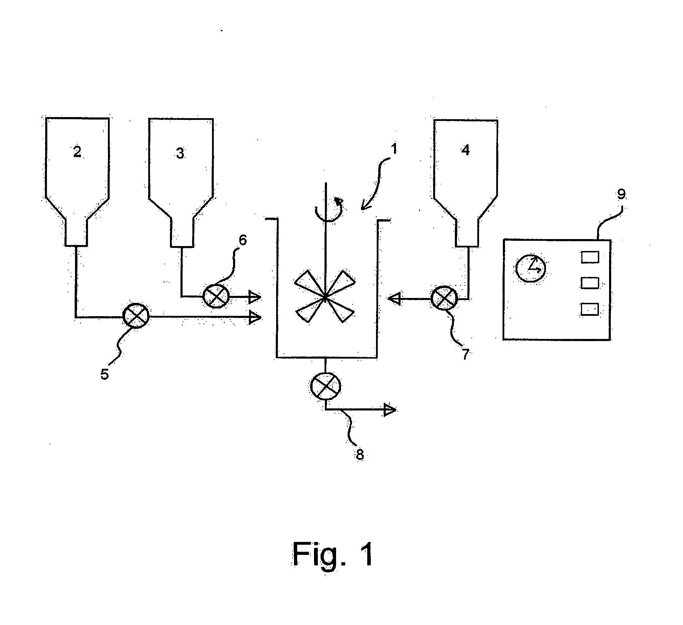

La présente invention, sans qu'elle en soit pour autant limitée, va maintenant être exemplifiée avec la description qui suit d'un mode de réalisation et en relation avec la Figure 1 qui représente un schéma d'une installation pour production d'un enrobé selon l'invention.

A la base, l'invention consiste à incorporer le liant bitumineux en deux étapes successives pour réaliser un enrobés à chaud économe en liant bitumineux.

La première étape (ou temps) dans laquelle on introduit dans le malaxeur le mélange granulaire et seulement une partie du liant bitumineux conduit à une agglomération des éléments les plus fins et à la réalisation d'un mastic. Les granulats ne sont alors que très partiellement enrobés et le mastic ainsi formé est enrichi en éléments fins. L'enrichissement du liant en fines formant le mastic limite la possibilité de mélange ultérieur des fines avec le reste du liant au cours de la seconde étape. Le reste du liant introduit lors de la seconde étape peut alors facilement enrober l'ensemble des gros granulats du squelette. Comme les fines libres ont disparues (les fines ont été incorporées au mastic réalisé à la première étape), la viscosité du reste du liant qui est introduit à la seconde étape est peu modifiée.

La fixation des éléments les plus fins par la première injection de liant (première étape) conduit généralement à un enrobé qui présente en fin de malaxage un aspect plus «gras». Cette brillance plus importante du film de liant peut être attribuée à l'absence de fines dans le liant bitumineux qui enrobe les éléments les plus gros du squelette granulaire. Elle traduit également la répartition différente du liant bitumineux au sein du squelette granulaire.

Ces deux particularités permettent la mise au point de formulations d'enrobés optimisées en terme de performance et de consommation de liants bitumineux.

Les enrobés peuvent être fabriqués dans n'importe quelle centrale d'enrobage. Une centrale d'enrobage est généralement constituée des principaux éléments suivants :
- des moyens de stockage des gros granulats 3, des éléments fins 2 et du bitume 4 ainsi que des moyens de dosage pour chacun de ces constituants 5, 6 et 7,
- une unité de séchage des gros granulats,
- une unité de malaxage 1,
- des moyens pour introduire les différents constituants dans le malaxeur,
- des moyens pour récupérer les enrobés chauds.

Dans le cadre de l'invention, l'enrobage s'effectue selon la séquence suivante :
- incorporation sur l'ensemble du squelette granulaire (mélange des gros granulats et des éléments fins) d'une fraction du liant hydrocarboné (première étape),
- malaxage humide (première étape) pour produire un « mastic »,
- incorporation du complément en liant hydrocarboné pour atteindre la quantité de liant totale de la formule (seconde étape),
- malaxage complémentaire (seconde étape).

Le malaxage dit « humide » correspond au malaxage du liant hydrocarboné avec des granulats par opposition au malaxage dit « sec » correspondant aux mélange des différents granulats avant introduction du liant.

Il existe deux types principaux de procédés de préparation des enrobés bitumineux, les procédés continus et discontinus. De manière à assurer un bon enrobage et de bonnes performances mécaniques finales, il est classique de sécher les granulats et de les porter à une température proche de celle du bitume. De même, le bitume est généralement injecté à chaud.

En pratique, l'introduction du liant bitumineux en deux séquences successives peut se faire en milieu industriel sur un poste discontinu. Dans ce cas, le procédé de l'invention allonge légèrement la durée de production d'une gâchée, puisque ce procédé nécessite deux séquences d'introduction du liant et deux périodes de malaxage humide. Par exemple une installation telle que schématisée sur la Figure 1 est utilisée. Cette installation comporte un malaxeur 1 pouvant recevoir dans sa cuve de manière discontinue les différentes fractions granulométriques du granulat dont des fines provenant d'un moyen de stockage 2, des gros granulats provenant d'un moyen de stockage 3 et un liant hydrocarboné provenant d'un moyen de stockage 4. Une sortie 8 avec vanne pour récupération de l'enrobé réalisé est prévue. Des vannes 5, 6 et 7 respectivement permettent de régler le dosage de ces éléments grâce à un moyen de contrôle 9 comportant des moyens de commande séquencés des vannes, moteur du malaxeur et autres éléments (par exemple pour chauffage de cuve et/ou de moyen de stockage) de l'installation non représentés pour simplifier la Figure. Le séquencement des commandes permet la réalisation en deux temps de l'enrobé avec une réalisation intermédiaire d'un mastic en utilisant dans le premier temps qu'une partie du liant hydrocarboné.

Dans un procédé continu, les granulats entrent de manière continue dans un tambour comprenant une zone de séchage comprenant un moyen permettant le chauffage et le séchage des granulats. Dans une autre zone du tambour, les granulats venant de la zone de séchage sont enrobés par le bitume liquide avant de sortir et d'être acheminés vers une trémie de stockage tampon. Le procédé de l'invention peut également être mis en oeuvre en poste continu en mettant en place un second circuit d'alimentation en liant et une seconde canne d'injection décalée par rapport à la première canne d'injection.

Le liant hydrocarboné est de préférence du bitume soit un mélange de matières hydrocarbonées d'origine naturelle issues de la fraction lourde obtenue lors de la distillation du pétrole, ou provenant de gisements naturels se présentant sous forme solide ou liquide, de densité comprise entre 0,8 et 1,2. Les bitumes de l'invention peuvent être préparés par toute technique conventionnelle. Sont également admis comme bitumes au sens de l'invention les liants d'origine végétale tel que le Végécol®, commercialisé par la société Colas et décrit dans la demande de brevet FR 2 853 647, les liants de synthèse d'origine pétrolière tels que la gamme des liants Bituclair® commercialisée par la société Colas, les bitumes modifiés par incorporation d'additifs de toute nature tels que des additifs en vue d'améliorer les caractéristiques d'adhésivité, les additifs liquides permettant la production d'enrobé à température réduite, par incorporation d'élastomères, sous forme de poudrette de caoutchouc ou autre, ou bien encore les bitumes améliorés par l'addition de polymères de différents types, tels que des copolymères d'éthylène et d'acétate de vinyle, ou des copolymères statistiques ou à blocs de styrène et de diènes conjugués, par exemple les copolymères à blocs SBS. Cette liste n'étant bien entendu pas limitative. Il est également possible d'utiliser des mélanges de bitumes de différents types.

Pour le terme « granulat » et « mélange granulaire », il est fait référence aux matériaux et agrégats décrits dans les normes XP-P 18 545 et NF EN 13808-8.

Les 3 exemples suivants, non limitatifs, illustrent la présente invention, dans le cas d'un mélange au bitume pur, d'une formulation d'EME incorporant des agrégats d'enrobés et d'une formulation à base de liant modifié.

### EXEMPLES

### I. Béton bitumineux à module éleve 0/10 (BBME 0/10)

Ce premier exemple décrit les performances mesurées dans le cadre d'une étude de formulation en laboratoire selon une approche fondamentale au sens de la norme EN 13108-20, c'est-à-dire comportant la détermination des caractéristiques de module et de fatigue. Les trois compositions sont exprimées en kilogramme, ce qui permet de vérifier que la seule variable est bien le dosage en liant total du mélange.

### I.1. Formulation

### a. Composition BBME témoin

| | | |
|---|---|---|
| Mélange granulaire : | 6/10 Diorite | 360 kg |
| | 2/6 Diorite | 300 kg |
| | 0/2 Diorite | 320 kg |
| | Filler calcaire | 20 kg |
| Bitume pur de classe 20/30 : | | 57 kg |

Cette composition correspond à un dosage en liant total de 5,39% en poids, par rapport aux poids total du liant hydrocarboné et du mélange granulaire.

### b. Composition BBME de l'invention avec réduction d'environ 3,5% en poids de la teneur en liant hydrocarboné

| | | |
|---|---|---|
| Mélange granulaire : | 6/10 Diorite | 360 kg |
| | 2/6 Diorite | 300 kg |
| | 0/2 Diorite | 320 kg |
| | Filler calcaire | 20 kg |
| Bitume pur de classe 20/30 : | | 55 kg |

Cette seconde composition correspond à un dosage en liant total de 5,21% en poids, par rapport aux poids total du liant hydrocarboné et du mélange granulaire.

### c. Composition BBME de l'invention avec réduction d'environ 8,5% en poids de la teneur en liant hydrocarboné

| | | |
|---|---|---|
| Mélange granulaire : | 6/10 Diorite | 360 kg |
| | 2/6 Diorite | 300 kg |
| | 0/2 Diorite | 320 kg |
| | Filler calcaire | 20 kg |
| Bitume pur de classe 20/30 : | | 52 kg |

Cette troisième composition correspond à un dosage en liant total de 4,94%.

### 1.2. Procédé de préparation

Le procédé traditionnel consiste à constituer le mélange granulaire et à ajouter en une seule étape la totalité du liant hydrocarboné. Le mélange granulaire est porté à 180°C. Puis, on incorpore la totalité du bitume qui est lui-même à 180°C. Le malaxage est réalisé pendant 120 secondes à 180°C.

Le procédé de l'invention consiste à constituer le mélange granulaire. Ce mélange granulaire est porté à 180°C. Le bitume est stocké à 180°C. On incorpore dans le malaxeur 50% en poids de la quantité déterminée de bitume. On malaxe pendant 60 secondes à 180°C. On incorpore ensuite le reste du bitume (donc 50%) et on malaxe à nouveau pendant 60 secondes à 180°C. Dans cet exemple, chaque injection de liant à la fabrication correspond à l'introduction de la moitié du liant total nécessaire à la fabrication de l'enrobé.

### 1.3. Résultats

Des études comparatives de performances mécaniques ont été effectuées entre la formule témoin réalisée par le procédé traditionnel et les deux enrobés réalisés selon l'invention incorporant des quantités moindres de liant bitumineux. Le tableau suivant résume cette comparaison :

| Caractéristique mécanique | Formule témoin BBME 0/10 | Double enrobage (Réduction de 3,5%) | Double enrobage (Réduction de 8,5%) |
|---|---|---|---|
| Teneur en liant du mélange en % | 5,39% | 5,21% | 4,9 % |
| Essai PCG (EN 12697-31 janvier 2005) % de vides à 60 girations | 8,3 | 8,6 | 9,9 |
| Essai Duriez tenue à l'eau (NF P98-251-1 Septembre2002) Rapport r/R | 0,86 | 0,87 | 0,85 |
| Essai d'orniérage (EN 12697-22 juin 2004) Ornière en % à 30000 cycles 60°C | 4,5 | 4,4 | - |
| Module en MPa (EN12697-26, Déc. 2004) | | | |
| Annexe D : 15°C 0,02s | 12900 | 14000 | 12500 |
| Annexe A : 15°C 10 Hz | | | |
| % de vides des éprouvettes | 6,5 | 6,9 | 6,9 |
| Tenue en fatigue (EN 12697-24 mars 2005) | | | |
| ε₆(µdefs) | 115 | 114 | 111 |
| % de vides des éprouvettes | 6 | 7,4 | 7,4 |

On note dans cet exemple que l'incorporation du liant en deux étapes successives conduit, malgré une réduction de la quantité totale de liant dans le mélange d'environ 3,5 %, à un maintien de l'ensemble des performances mécaniques. Il est même possible que la tenue en fatigue soit améliorée sur ce type de mélange obtenu en double enrobage, car la valeur mesurée de 114 µdefs, est obtenue sur des corps d'épreuves moins compacts. Si la réduction de teneur en liant est amplifiée et portée à environ 8,5% comme dans l'exemple présentée, on observe une réduction modérée de la maniabilité au travers du résultat d'essai PCG, mais un maintien de la tenue à l'eau mesurée sur ce mélange.

On comprend que l'invention peut être mise en oeuvre selon d'autres modalités que celle exemplifiée sans pour autant sortir du cadre général défini par les revendications. Par exemple, il est possible d'utiliser des proportions différentes, autres que 50%-50%, pour chaque injection de liant, tout en visant une réduction de la quantité totale de liant par rapport à une formulation similaire obtenue par simple enrobage.

### II. Enrobé module éleve 0/14 cl2 (EME 0/14)

Ce second exemple présente les caractéristiques mesurées sur une formulation témoin d'EME 0/14, incorporant 20% d'agrégats d'enrobés, et sur le même mélange préparé par double enrobage avec réduction de la teneur en liant d'apport. Les deux compositions sont exprimées en kilogramme, ce qui permet de vérifier que la seule variable est bien le dosage en liant total du mélange. Seules les résultats de tenue à l'eau, de maniabilité PCG, de module et de tenue en fatiogue sont présentés

### II.1. Formulation

### a. Composition EME témoin

| | | |
|---|---|---|
| Mélange granulaire : | 10/14 Calcaire | 315 kg |
| | 6/10 Calcaire | 130 kg |
| | 2/6 Calcaire | 130 kg |
| | 0/2 Calcaire | 200 kg |
| | Agrégats d'enrobés | 200 kg |
| | Filler calcaire | 25 kg |
| Bitume pur d'apport de classe 10/20 : | | 50 kg |
| Bitume total (Agrégats + Apport) | | 60 kg |

Cette composition correspond à un dosage en liant total de 5,71 % en poids, par rapport aux poids total du liant hydrocarboné et du mélange granulaire.

### b. Composition EME de l'invention avec réduction de 8% de la teneur en liant total

| | | |
|---|---|---|
| Mélange granulaire : | 10/14 Calcaire | 315 kg |
| | 6/10 Calcaire | 130 kg |
| | 2/6 Calcaire | 130 kg |
| | 0/2 Calcaire | 200 kg |
| | Agrégats d'enrobés | 200 kg |
| | Filler calcaire | 25 kg |
| Bitume pur d'apport de classe 10/20 : | | 45 kg |
| Bitume total (Agrégats + Apport) | | 55 kg |

Cette composition correspond à un dosage en liant total de 5,27% en poids, par rapport aux poids total du liant hydrocarboné et du mélange granulaire.

### II.2. Procédé de préparation

Le procédé de préparation est identique à celui de l'exemple précédent.

### II.3. Résultats

Des études comparatives de performances mécaniques ont été effectuées entre la formule témoin réalisée par le procédé traditionnel la formulation réalisée selon l'invention incorporant des quantités moindres de liant bitumineux. Le tableau suivant résume cette comparaison :

| Caractéristique mécanique | Formule témoin EME 0/14 | Double enrobage (Réduction de 8%) |
|---|---|---|
| Teneur en liant du mélange en % | 5,71% | 5,27% |
| Essai PCG (EN 12697-31 janvier 2005) % de vides à 100 girations | 0,9 | 3,4 |
| Essai Duriez tenue à l'eau (NF P98-251-1 Septembre2002) Rapport r/R | 0,93 | 0,95 |
| Module en MPa (EN12697-26, Déc. 2004) Annexe A : 15°C,10 Hz | 15880 | 16220 |
| % de vides des éprouvettes | 2,5 | 3,3 |
| Tenue en fatigue (EN 12697-24 mars 2005) ε₆(µdefs) | 136 | 130 |
| % de vides des éprouvettes | 2,5 | 3,3 |

On note dans cet exemple que l'incorporation du liant en deux étapes successives conduit, malgré une réduction de la quantité totale de liant dans le mélange d'environ 8%, à un maintien de l'ensemble des performances mécaniques de module et tenue en fatigue.

### III. Béton bitumineux mince à base de liant modifié bitulastic EB 0/10 (BBMa 0/10 cl3)

Ce troisième exemple décrit les performances mesurées dans le cadre d'une étude de formulation en laboratoire comprenant la détermination de la maniabilité PCG, la tenue à l'eau à l'essai Duriez et la tenue à l'orniérage, c'est-à-dire comportant la détermination des caractéristiques générales demandées dans l'avant propos de la norme EN 13108-1 pour ce type de formulation. Les trois compositions sont exprimées en kilogramme, ce qui permet de vérifier que la seule variable est bien le dosage en liant total du mélange.

### III.1. Formulation

### a. Composition BBMa témoin

| | | |
|---|---|---|
| Mélange granulaire : | 6/10 Diorite | 680 kg |
| | 0/2 Diorite | 300 kg |
| | Filler calcaire | 20 kg |
| Liant modifié : | | 55 kg |

Cette composition correspond à un dosage en liant total de 5,21% en poids, par rapport aux poids total du liant hydrocarboné et du mélange granulaire.

### b. Composition BBMa de l'invention avec réduction d'environ 5,4 % en poids de la teneur en liant hydrocarboné

| | | |
|---|---|---|
| Mélange granulaire : | 6/10 Diorite | 680 kg |
| | 0/2 Diorite | 300 kg |
| | Filler calcaire | 20 kg |
| Liant modifié : | | 52 kg |

Cette seconde composition correspond à un dosage en liant total de 4,94% en poids, par rapport aux poids total du liant hydrocarboné et du mélange granulaire.

### c. Composition BBMa de l'invention avec réduction d'environ 9% en poids de la teneur en liant hydrocarboné

| | | |
|---|---|---|
| Mélange granulaire : | 6/10 Diorite | 680 kg |
| | 0/2Diorite | 300 kg |
| | Filler calcaire | 20 kg |
| Liant modifié : | | 50 kg |

Cette dernière composition correspond à un dosage en liant total de 4,76%.

### III.2. Procédé de préparation

Le procédé de fabrication en laboratoire est le même que celui de l'exemple précédent la seule variation portant sur la température, adaptée à la nature du liant modifié utilisé ici, et fixée à 170°C.

### III.3. Résultats

Des études comparatives de performances mécaniques ont été effectuées entre la formule témoin réalisée par le procédé traditionnel et les deux enrobés réalisés selon l'invention incorporant des quantités moindres de liant bitumineux. Le tableau suivant résume cette comparaison :

| Caractéristique mécanique | Formule témoin BBMa 0/10 | Double enrobage (Réduction de 5%) | Double enrobage (Réduction de 9%) |
|---|---|---|---|
| Teneur en liant du mélange en % | 5,21% | 4,94% | 4,76 % |
| Essai PCG (EN 12697-31/01/2005) % de vides à 40 girations | 8,6 | 10,4 | 11 |
| Essai Duriez tenue à l'eau (NF P98-251-1 Septembre2002) Rapport r/R | 0,95 | 0,94 | 0,92 |
| Essai d'orniérage (EN 12697-22/06/2004) % de vide moyen des plaques | 8,3 | 8,5 | 7,9 |
| Ornière en % à 30000 cycles 60°C | 6,5 | 6,5 | 4,8 |

On note dans cet exemple que l'incorporation du liant en deux étapes successives conduit, malgré une réduction de la quantité totale de liant dans le mélange d'environ 9 %, à un maintien de l'ensemble des performances mécaniques.

## Revendications

1. Procédé de préparation d'un enrobé à chaud présentant une teneur réduite en liant hydrocarboné, ledit enrobé comprenant une quantité déterminée d'un liant hydrocarboné et un mélange granulaire comprenant au moins des éléments fins tels que des fines et des gros granulats tels que des gravillons, des graviers et/ou des sables, ledit procédé comprenant au moins les étapes successives suivantes :
- incorporation, dans un premier temps, à l'ensemble du mélange granulaire d'une première partie seulement de la quantité déterminée du liant hydrocarboné dans un malaxeur (1),
- malaxage humide pour former un mastic,
- incorporation dans un second temps de la quantité restante de liant hydrocarboné,
- malaxage,
**caractérisé en ce que** la première partie de la quantité de liant hydrocarboné incorporée en poids par rapport au poids total de la quantité déterminée de liant hydrocarboné est comprise entre 30 % et 70 %.

2. Procédé selon la revendication 1, **caractérisé en ce que** la première partie de la quantité de liant hydrocarboné incorporée en poids par rapport au poids total de la quantité déterminée de liant hydrocarboné est de préférence comprise entre 40 et 60 % et mieux encore de 50 %.

3. Procédé selon la revendication 1 ou 2, **caractérisé en ce que** la même température est utilisée lors des deux temps.

4. Procédé selon l'une quelconque des revendications précédentes, **caractérisé en ce que** l'enrobé est choisi parmi les enrobés bitumineux à module élevé (EME), les bétons bitumineux à module élevé (BBME), les bétons bitumineux semi-grenus (BBSG), les bétons bitumineux minces (BBM) et les bétons bitumineux très minces (BBTM).

5. Procédé selon l'une quelconque des revendications précédentes, **caractérisé en ce que** le mélange granulaire comprend des agrégats d'enrobés.

6. Procédé selon l'une quelconque des revendications précédentes, **caractérisé en ce que** le liant hydrocarboné a une pénétrabilité à 25°C, mesurée selon la norme NF EN 1426, de 0 à 70 (1/10 mm), de préférence de 0 à 35 (1/10 mm), dans le cas de BBME et d'EME.

7. Procédé selon la revendication 4 **caractérisé en ce que** l'enrobé est un béton bitumineux à module élevé comprenant en poids par rapport au poids total de l'enrobé :
- 1 à 5 % de fines, de préférence du filler calcaire,
- 90 à 95 % de granulats de préférence des granulats 0/10, et
- 4,9 à 5,25 % de liant hydrocarboné, de préférence un bitume pur de classe 20/30.

8. Procédé selon la revendication 4 **caractérisé en ce que** l'enrobé est un enrobé à module élevé comprenant en poids par rapport au poids total de l'enrobé :
- 1 à 5 % de fines, de préférence du filler calcaire,
- 90 à 95 % de granulats de préférence des granulats 0/14, et
- 5 à 5,3 % de liant hydrocarboné, de préférence un bitume pur de classe 10/20.

9. Procédé selon la revendication 4 **caractérisé en ce que** l'enrobé est un béton bitumineux mince comprenant en poids par rapport au poids total de l'enrobé :
- 1 à 5 % de fines, de préférence du filler calcaire,
- 90 à 95 % de granulats de préférence des granulats 0/10, et
- 4,6 à 4,9 % de liant hydrocarboné, de préférence un bitume modifié par un polymère.

## Patentansprüche

1. Verfahren zur Herstellung eines heißen Mischguts mit einem geringen Gehalt an kohlenwasserstoffhaltigem Binder, wobei das Mischgut eine bestimmte Menge eines kohlenwasserstoffhaltigen Binders und ein Granulatgemisch umfasst, das mindestens Feinanteile, wie beispielsweise Feinstoffe und Grobgranulat, wie beispielsweise Splitt, Kies und/oder Sand, umfasst, wobei das Verfahren mindestens die folgende Abfolge von Schritten umfasst:
- erstens, Einmischen, in die Gesamtheit des Granulatgemischs, nur eines ersten Teils der bestimmten Menge an kohlenwasserstoffhaltigem Binder in einem Mischer (1),
- Nassmischen um einen Mastix zu bilden,
- zweitens, Einmischen der verbleibenden Menge an kohlenwasserstoffhaltigem Binder,
- Mischen,
**dadurch gekennzeichnet, dass** der erste Teil der eingemischten Menge an kohlenwasserstoffhaltigem Binder, in Gewichtsanteilen bezogen auf das Gesamtgewicht der bestimmten Menge an kohlenwasserstoffhaltigem Binder, im Bereich zwischen 30 % und 70 % liegt.

2. Verfahren nach Anspruch 1, **dadurch gekennzeichnet, dass** der erste Teil der eingemischten Menge an kohlenwasserstoffhaltigem Binder, in Gewichtsanteilen bezogen auf das Gesamtgewicht der bestimmten Menge an kohlenwasserstoffhaltigem Binder, bevorzugt im Bereich zwischen 40 und 60 % und stärker bevorzugt bei 50 % liegt.

3. Verfahren nach Anspruch 1 oder 2, **dadurch gekennzeichnet, dass** bei beiden Schritten die gleiche Temperatur verwendet wird.

4. Verfahren nach einem der vorhergehenden Ansprüche, **dadurch gekennzeichnet, dass** das Mischgut ausgewählt ist aus Asphaltmischgut mit hohem Steifigkeitsmodul (französische Abkürzung EME = enrobes bitumineux à module élevé), Asphaltbeton mit hohem Steifigkeitsmodul (franz. Abk. BBME = bétons bitumineux à module élevé), mittelgrober Splittmastixasphalt (franz. Abk. BBSG = betons bitumineux semi-grenus), Asphaltbeton für dünne Schichten (franz. Abk. BBM = betons bitumineux minces) und Asphaltbeton für sehr dünne Schichten (franz. Abk. BBTM = betons bitumineux tres minces).

5. Verfahren nach einem der vorhergehenden Ansprüche, **dadurch gekennzeichnet, dass** das Granulatgemisch Mischgutaggregate umfasst.

6. Verfahren nach einem der vorhergehenden Ansprüche, **dadurch gekennzeichnet, dass** der kohlenwasserstoffhaltige Binder einen Penetrationswert bei 25 °C, gemessen gemäß der Norm NF EN 1426, von 0 bis 70 (1/10 mm), bevorzugt von 0 bis 35 (1/10 mm), im Fall von BBME und EME aufweist.

7. Verfahren nach Anspruch 4, **dadurch gekennzeichnet, dass** das Mischgut ein Asphaltbeton mit hohem Steifigkeitsmodul ist, der, in Gewichtsanteilen bezogen auf das Gesamtgewicht des Mischguts, Folgendes umfasst:
- 1 bis 5 % Feinstoffe, bevorzugt Kalksteinfüller,
- 90 bis 95 % Granulat, bevorzugt Granulat 0/10, und
- 4,9 bis 5,25 % kohlenwasserstoffhaltigen Binder, bevorzugt ein reines Bitumen der Klasse 20/30.

8. Verfahren nach Anspruch 4, **dadurch gekennzeichnet, dass** das Mischgut ein Mischgut mit hohem Steifigkeitsmodul ist, das, in Gewichtsanteilen bezogen auf das Gesamtgewicht des Mischguts, Folgendes umfasst:
- 1 bis 5 % Feinstoffe, bevorzugt Kalksteinfüller,
- 90 bis 95 % Granulat, bevorzugt Granulat 0/14, und
- 5 bis 5,3 % kohlenwasserstoffhaltigen Binder, bevorzugt ein reines Bitumen der Klasse 10/20.

9. Verfahren nach Anspruch 4, **dadurch gekennzeichnet, dass** das Mischgut ein Asphaltbeton für dünne Schichten ist, der, in Gewichtsanteilen bezogen auf das Gesamtgewicht des Mischguts, Folgendes umfasst:
- 1 bis 5 % Feinstoffe, bevorzugt Kalksteinfüller,
- 90 bis 95 % Granulat, bevorzugt Granulat 0/10, und
- 4,6 bis 4,9 % kohlenwasserstoffhaltigen Binder, bevorzugt ein polymermodifiziertes Bitumen.

## Claims

1. Process for preparing a hot mix with a reduced content of hydrocarbon binder, said mix comprising a specified amount of a hydrocarbon binder and a granular mixture comprising at least fine elements such as fines and coarse aggregates such as gravels, grits and/or sands, said process comprising at least the following successive steps:
- first, incorporating into the whole granular mixture only a first part of the hydrocarbon binder specified amount in a mixer (1),
- wet mixing to form a mastic,
- second, incorporating the remaining amount of hydrocarbon binder,
- mixing,
**characterized in that** the first part of the incorporated hydrocarbon binder amount, by weight based on the total weight of the specified amount of hydrocarbon binder, is between 30% and 70%.

2. Process according to claim 1, **characterized in that** the first part of the incorporated hydrocarbon binder amount, by weight based on the total weight of the specified amount of hydrocarbon binder, is preferably between 40 and 60% and more preferably 50%.

3. Process according to claim 1 or 2, **characterized in that** the same temperature is used during the two steps.

4. Process according to any one of the preceding claims, **characterized in that** the mix is selected from high modulus asphalt mixes (Enrobes a Module Elevé or EME), high modulus bituminous concretes (Bétons Bitumineux à Module Elevé or BBME), thick solution systems (Bétons Bitumineux Semi-Grenus or BBSG), thin asphalt concretes (Bétons Bitumineux Minces or BBM) and very thin asphalt concretes (Bétons Bitumineux Très Minces or BBTM).

5. Process according to any one of the preceding claims, **characterized in that** the granular mixture comprises mix aggregates.

6. Process according to any one of the preceding claims, **characterized in that** the hydrocarbon binder has a penetrability at 25°C, measured according to the standard NF EN 1426, of from 0 to 70 (1/10 mm), preferably from 0 to 35 (1/10 mm), in the case of BBME and EME.

7. Process according to claim 4, **characterized in that** the mix is a high modulus bituminous concrete comprising by weight based on the total weight of the mix:
- from 1 to 5% of fines, preferably limestone filler,
- from 90 to 95% of aggregates, preferably aggregates 0/10, and
- from 4.9 to 5.25% of hydrocarbon binder, preferably a pure 20/30 bitumen.

8. Process according to claim 4, **characterized in that** the mix is a high modulus asphalt mix comprising by weight based on the total weight of the mix:
- from 1 to 5% of fines, preferably limestone filler,
- from 90 to 95% of aggregates, preferably aggregates 0/14, and
- from 5 to 5.3% of hydrocarbon binder, preferably pure 10/20 bitumen.

9. Process according to claim 4, **characterized in that** the mix is a thin asphalt concrete comprising by weight based on the total weight of the mix:
- from 1 to 5% of fines, preferably limestone filler,
- from 90 to 95% of aggregates, preferably aggregates 0/10, and
- from 4.6 to 4.9% of hydrocarbon binder, preferably a polymer modified bitumen.
